# EUROPÄISCHE PATENTSCHRIFT

(11) **EP 2 200 775 B1**
(45) Veröffentlichungstag und Bekanntmachung des Hinweises auf die Patenterteilung: **20.07.2011**
(21) Anmeldenummer: 08785790.0
(22) Anmeldetag: 02.09.2008
(51) Int. Cl.: B23D 77/02

(54) **REIBAHLE**
REAMER
ALÉSOIR

(30) Priorität: 04.09.2007 DE 102007041933; 02.10.2007 DE 102007048633
(43) Veröffentlichungstag der Anmeldung: 30.06.2010
(73) Patentinhaber: MAPAL Fabrik für Präzisionswerkzeuge Dr. Kress KG, 73431 Aalen (DE)
(72) Erfinder: KRESS, Dieter, 73431 Aalen (DE)
(74) Vertreter: Gleiss, Alf-Olav
(86) Internationale Anmeldenummer: PCT/EP2008/007145
(87) Internationale Veröffentlichungsnummer: WO 2009/030455

(56) Entgegenhaltungen:
- WO-A-2007/006575
- JP-A- 2000 317 828
- US-A1- 2007 071 561

## Beschreibung

Die Erfindung betrifft eine Reibahle gemäß Oberbegriff des Anspruchs 1, wie sie aus der WO 2007/006575 bekannt ist.

Reibahlen der hier angesprochenen Art sind bekannt. Sie weisen einen Grundkörper, mindestens eine im Wesentlichen parallel zu einer Stirnfläche der Reibahle angeordnete Messerplatte sowie eine Justiereinrichtung auf. Die mindestens eine Messerplatte weist eine Haupt- und eine sich darin anschließende Nebenschneide auf. In der Regel ist die Hauptschneide in Vorschubrichtung des Werkzeugs geneigt, die Nebenschneide in die entgegengesetzte Richtung. Entscheidend für gute Oberflächenqualitäten der bearbeiteten Bohrung ist, dass sich im Bereich der Nebenschneide ein als Verjüngung bezeichneter Abfall von 1 µ bis 3 µ, vorzugsweise von 1 µ auf 1 mm ergibt und dass dieser auch beim Justieren des Durchmessers der Reibahle erhalten bleibt. Es hat sich herausgestellt, dass sich die Verjüngung der Nebenschneide beim Einstellen des Durchmessers der Reibahle häufig verändert und nachjustiert werden muss, weil sonst hohe Oberflächenqualitäten der bearbeiten Bohrung nicht gewährleistet werden können.

Aufgabe der Erfindung ist es daher, eine Reibahle zu schaffen, welche die genannten Nachteile vermeidet.

Zur Lösung dieser Aufgabe wird eine Reibahle der Eingangs genannten Art vorgeschlagen, welche die in Anspruch 1 genannten Merkmale zeigt. Sie weist einen Grundkörper, mindestens eine Messerplatte sowie eine Justiereinrichtung auf. Die Messerplatte ist mit wenigstens einer geometrisch definierten Hauptschneide und einer geometrisch definierten Nebenschneide versehen. Sie liegt mit ihrer Rückseite an einer Auflagefläche an, die am Grundkörper der Reibahle vorgesehen ist. Die Messerplatte ist in Unteransicht mehreckig ausgebildet. Sie wird von einer Spannschraube, welche die Messerplatte durchdringt, an die Auflagefläche angepresst. Mittels einer Justiereinrichtung kann die Position der Messerplatte, die in eine Stirnseite der Reibahle eingesetzt ist, eingestellt werden. Dabei wird der radiale Überstand der Haupt- und Nebenschneide der Messerplatte auf ein gewünschtes Maß eingestellt, um einen definierten Bearbeitungsdurchmesser zu gewährleisten. Dabei gleitet die Messerplatte auf der Auflagefläche. Damit die Messerplatte gut und sicher auf der Auflagefläche aufliegt, ist die Größe der Rückseite möglichst groß gewählt. Die Reibahle zeichnet sich dadurch aus, dass das Verhältnis des Durchmessers eines gedachten Inkreises, welcher die Seitenkanten der Messerplatte tangiert, zur Dicke der Messerplatte in einem Bereich von 1,0 bis 1,5 liegt. Besonders bewährt hat sich ein Verhältnis von Durchmesser des Inkreises zur Plattendicke von mindestens 1,2, wobei als oberer Grenzwert 1,5 gewählt wird.

Weitere Ausgestaltungen ergeben sich aus den Unteransprüchen.

Die Erfindung wird im Folgenden anhand der Zeichnung näher erläutert. Es zeigen:
- Figur 1: eine perspektivische Vorderansicht der Reibahle;
- Figur 2: eine Draufsicht auf die Vorderseite der Reibahle gemäß Figur 1 und
- Figur 3: eine Seitenansicht der Reibahle.

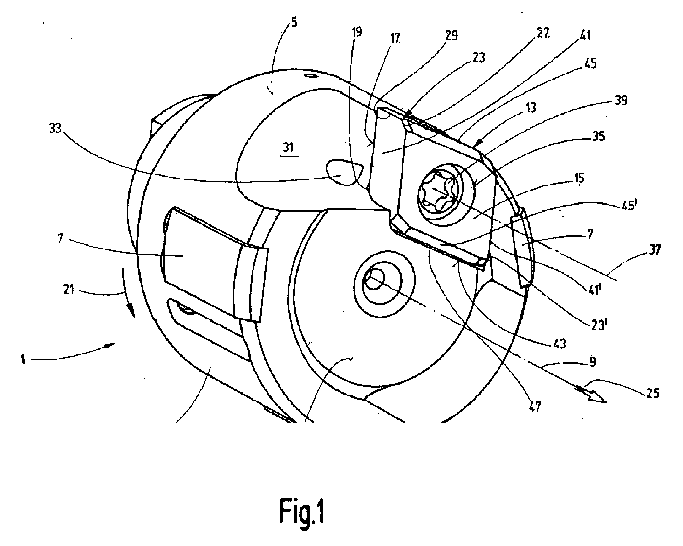

Bei dem in Figur 1 dargestellten Werkzeug zur spanenden Bearbeitung von Werkstücken handelt es sich um eine Reibahle 1 mit einem Grundkörper 3, in dessen Umfangsfläche 5 mindestens eine, hier drei Führungsleisten 7 eingesetzt sind, die im wesentlichen parallel zur Dreh- oder Mittelachse 9 der Reibahle 1 verlaufen. In die Stirnseite 11 der Reibahle 1 ist im Wesentlichen tangential mindestens eine Messerplatte eingelassen. Bei dem hier dargestellten Ausführungsbeispiel der Reibahle 1 ist eine einzeige Messerplatte 13 vorgesehen, deren Vorderseite 15 dem Betrachter zugewandt ist und deren Rückseite 17 auf einer praktisch vollständig verdeckten Anlagefläche 19 am Grundkörper 3 der Reibahle 1 anliegt. Die Reibahle 1 dient dazu, Späne von einer Bohrung abzutragen. Dazu wird in der Regel das Werkzeug in Rotation versetzt und in eine Bohrung eines stillstehenden Werkstück eingeführt. Grundsätzlich ist es denkbar, die Reibahle 1 festzuhalten und das Werkstück in Rotation zu versetzten. Wird, wie üblich, die Reibahle 1 in Richtung des Pfeils 21 in Rotation versetzt, so werden von einem Schneidbereich 23 der Messerplatte 9, der die Umfangsfläche 5 in radialer Richtung, also senkrecht zur Mittelachse 9, überragt, Späne von einer Bohrungsoberfläche abgetragen. Bei der Bearbeitung des Werkstücks wird die Reibahle 1 dabei in Richtung des Doppelpfeils 25, also in Richtung seiner Mittelachse 9 vorgeschoben.

Aus Figur 1 ist ersichtlich, dass ein Abschnitt des Schneidbereichs 23 in Vorschubrichtung geneigt ist. Es handelt sich hier um die Hauptschneide 27 der Messerplatte 13. Beispielhaft ist hier ein Abschnitt dargestellt, der nur einen in Vorschubrichtung geneigten Bereich umfasst. Denkbar ist es aber, hier einen an die Stirnseite 11 angrenzenden ersten Bereich der Hauptschneide vorzusehen, der beispielsweise um 45° in Vorschubrichtung abfällt, und einen weiteren in Vorschubrichtung gesehen dahinterliegenden Bereich, der unter 3° bis 5° in Vorschubrichtung geneigt ist. Eine derartige Ausgestaltung bezeichnet man auch als Doppelanschnitt.

An die Hauptschneide 27, gegebenenfalls an den schwächer geneigten Bereich der Hauptschneide, schließt sich ein weiterer Abschnitt des Schneidbereichs 23 an, die Nebenschneide 29. Diese ist entgegen der durch den Doppelpfeil 25 angedeuteten Vorschubrichtung geneigt und fällt von der Hauptschneide 27 aus gesehen um 1 µ/mm bis 3 µ/mm, vorzugsweise um ein 1 µ/mm in Richtung auf die Mittelachse 9 ab. Eine derartige Ausgestaltung einer Nebenschneide ist bekannt. Sie wird auch als Verjüngung bezeichnet.

Bei der Bearbeitung eines Werkstücks werden von der Wand einer zu bearbeitenden Bohrung also zunächst Späne von der Hauptschneide 27 abgetragen. Der dabei bearbeitete Bereich wird anschließend von der Nebenschneide 29 bearbeitet. Die Verjüngung dient dazu, ein Verklemmen der Reibahle in der bearbeiteten Bohrung zu verhindern und eine optimale Oberflächengüte zu gewährleisten. Die zur Mittelachse 9 geneigte Nebenschneide 29 ist nicht zwingend über ihre ganze Länge, die von der Hauptschneide 27 bis zur Rückseite 17 der Messerplatte 13 gemessen wird, mit der Bohrungsoberfläche in Eingriff. Vorzugsweise ist vorgesehen, dass ausgehend vom Knickpunkt zwischen Haupt- und Nebenschneide ein Bereich von 3 mm der Nebenschneide 29 aktiv ist, also mit der Bohrungswand eines Werkstücks in Eingriff tritt.

Die vom Schneidbereich 23 abgetragenen Späne gelangen in eine als Spanraum 31 bezeichnete Ausnehmung im Grundkörper 3 der Reibahle 1 und können abtransportiert werden, damit die bearbeitete Bohrungsoberfläche nicht durch Späne beschädigt wird. Zur Kühlung und zum Abtransport der Späne sowie zur Schmierung des Schneidbereichs 23 kann über einen in dem Spanraum mündenden Kanal 33 ein Kühl-/Schmiermittel bereitgestellt werden.

In die Messerplatte 13 ist eine Ausnehmung 35 eingebracht, deren Längsachse senkrecht auf der Vorderseite 15 und auf der Rückseite 17 steht, außerdem auf der Anlagefläche 19. Durch die Ausnehmung 35 greift eine Spannschraube 39, mit der die Messerplatte 13 am Grundkörper 3 der Reibahle 1 befestigt und mit ihrer Rückseite 17 gegen die Anlagefläche 19 angepresst wird. Der Kopf der Spannschraube 39 liegt in der Messerplatte 13 versenkt in der Ausnehmung 35.

Es ist vorgesehen, dass die Anlagefläche 19 in radialer Richtung, also von der Mittelachse 9 aus gesehen, in Richtung auf die Umfangsfläche 5 der Reibahle 1 abfällt, nämlich um 1 µ/mm bis 3 µ/mm, vorzugsweise um 1 µ/mm. Da die Nebenschneide 29 gegenüber der Rückseite 17 der Messerplatte 13 senkrecht verläuft, dient diese Neigung der Anlagefläche 19 dazu, die Verjüngung der Nebenschneide 29, also deren Neigung gegenüber der Mittelachse 9 einzustellen. Vorzugsweise ist dabei auch die Längsachse 27 der Spannschraube 39 gegenüber der Mittelachse so geneigt, dass sie, wie oben gesagt, senkrecht auf der Anlagefläche 19 steht.

Aus der Darstellung gemäß Figur 1 ist erkennbar, dass die Messerplatte 13 -in Draufsicht gesehen- als' Parallelogramm ausgebildet ist. Eine erste Seitenfläche 41 weist in die durch den Pfeil 21 angedeutete Drehrichtung. Die gegenüberliegende Seite 41' liegt an einer Begrenzungswand einer in den Grundkörper 3 der Reibahle 1 eingebrachten Ausnehmung 43 an, welche die Messerplatte 13 aufnimmt. Eine äußere Längsseite 45 der Reibahle weist nach außen. Eine gegenüberliegende innere Längsseite 45' liegt an einer Innenwand 47 der Ausnehmung 43. Auf diese innere Längsseite 45' wirkt eine hier nicht dargestellte Justiereinrichtung, die dazu dient, den Überstand des Schneidbereichs 23 über die Umfangsfläche 5 der Reibahle 1 zu justieren und damit den Durchmesser des Werkzeugs einzustellen.

Die Messerplatte 23 weist vorzugsweise zwei Schneidbereiche auf. Diametral gegenüber dem Schneidbereich 23 ist ein Schneidbereich 23' vorgesehen. Bei Verschleiß des Schneidbereichs 23 kann die Spannschraube 39 gelöst werden. Die Messerplatte 13 wird dann um 180° um die Längsachse 37 gedreht und wieder in die Ausnehmung 43 eingesetzt, sodann mit der Spannschraube 39 festgespannt.

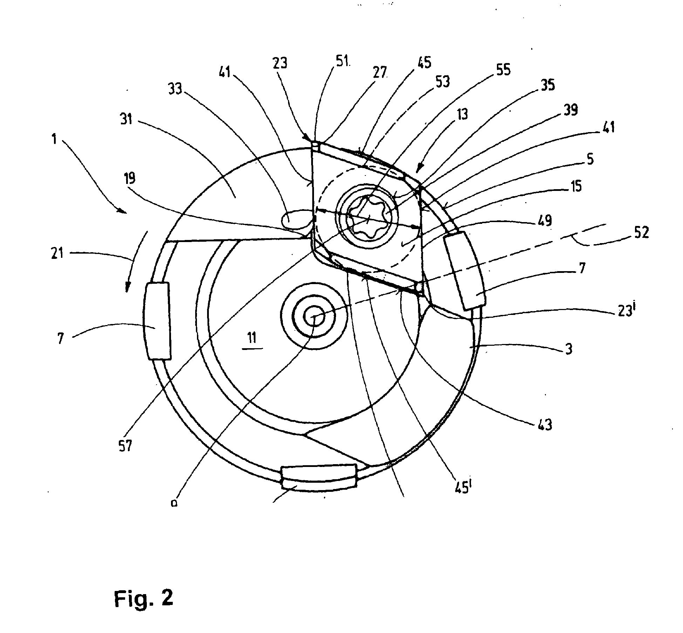

Figur 2 zeigt die Reibahle gemäß Figur 1 in Stirnseitenansicht, das heißt, die Stirnseite 11 der Reibahle 1 liegt in der Bildebene von Figur 2. Gleiche Teile sind mit gleichen Bezugsziffern versehen, sodass in sofern auf die vorangegangene Beschreibung verwiesen wird.

Die Messerplatte 13 ist in den Grundkörper 3 der Reibahle 1 eingelassen und zwar in die Ausnehmung 45. Sie liegt dabei mit ihrer der Vorderseite 15 gegenüberliegenden, hier verdeckten Rückseite auf der ebenfalls fast vollständig verdeckten Anlagefläche 19 auf, die am Grundkörper 3 der Reibahle 1 vorgesehen ist. Die Messerplatte 13 wird von einer Spannschraube 39 durchdrungen, die in einer Ausnehmung 35 in der Messerplatte 13 aufgenommen wird und in den Grundkörper 3 eingeschraubt ist, um die Messerplatte 13 am Grundkörper 3 der Reibahle zu befestigen.

Die Draufsicht auf die Reibahle 1 und auf die Messerplatte 13 zeigt, dass diese als Vieleck ausgebildet ist und im Wesentlichen die Form eines Parallelogramms aufweist. Vorzugsweise ist sie als Rhombus realisiert, wobei eine erste Seite 41 in der durch den Pfeil 21 angedeuteten Drehrichtung der Reibahle 1 weist. Die gegenüberliegende Seite 41' liegt an einer Begrenzungswand 49 der Ausnehmung 43 an, sodass die Messerplatte 13 sich sicher abstützt. Die im Bereich der Umfangsfläche 5 der Reibahle 1 liegende äußere Längsseite 45 bildet im Schnittbereich mit der ersten Seite 41 den Schneidbereich 23 der Messerplatte 13. Die der Längsseite 45 gegenüberliegende Längsseite 45' liegt an der Innenwand 47 der Ausnehmung 43 an, die unter einem spitzen Winkel zur Begrenzungswand 49 verläuft. Durch diesen spitzen Winkel der Wände der Ausnehmung 43 wird die Messerplatte 13 exakt ausgerichtet im Grundkörper 3 der Reibahle 1 gehalten.

Diagonal gegenüber dem Schneidbereich 23 liegt der Schneidbereich 23', der bei Verschleiß des in Figur 2 dargestellten aktiven Schneidbereichs 23 durch Drehung der Messerplatte 13 um die Mittelachse der Spannschraube 39 in Eingriff mit einem zu bearbeitenden Werkstück kommen kann.

Unmittelbar an den Schneidbereich 23 angrenzend ist eine Freifläche 51 zu sehen, die Teil der Längsseite 45 ist.

Der Stirnseitenansicht gemäß Figur 2 ist zu entnehmen, dass in der durch den Pfeil 21 angedeuteten Drehrichtung gesehen eine erste Führungsleiste dem Schneidbereich 23 um cirka 75° nacheilt, während eine zweite Führungsleiste diametral gegenüber dem Schneidbereich 23 angeordnet ist. Um 90° versetzt findet sich die dritte Führungsleiste, die gegenüber dem Schneidbereich 23 um 270° gegen die Drehrichtung versetzt ist, also wie bei den anderen Führungsleisten dem Schneidbereich 23 nacheilt. Die Winkelangaben beziehen sich auf eine gedachte Linie 52, die hier beispielhaft nur für eine der drei Führungsleisten eingezeichnet ist.

In Figur 2 ist punktiert ein Inkreis 53 eingezeichnet, der einen Durchmesser 55 aufweist. Dieser ist so gewählt, dass der um den Mittelpunkt 57 der Ausnehmung 35 gezeichnete Inkreis 53 die Seiten 41,41',45,45' der Messerplatte 13 tangiert.

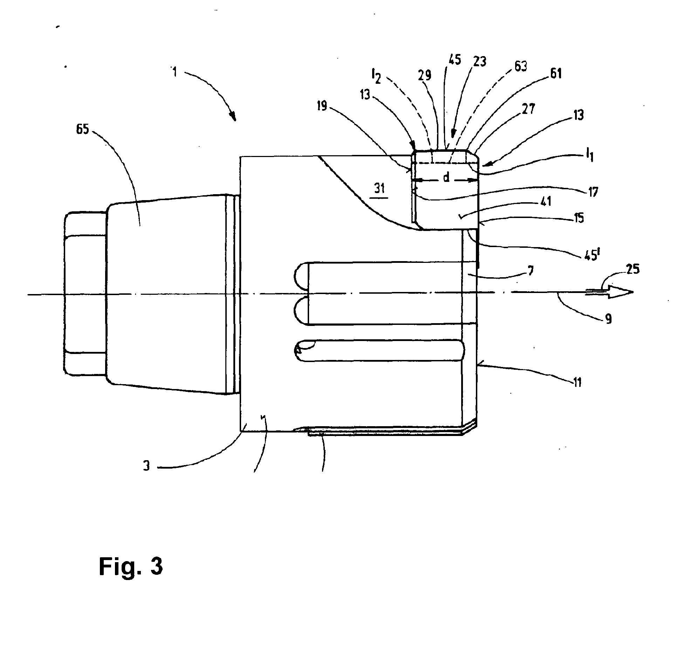

Figur 3 zeigt die Reibahle 1 in Seitenansicht, die hier so angeordnet ist, dass die erste Seite 41 der Messerplatte 13 in Frontansicht dargestellt ist. Sie liegt also parallel zur Bildebene von Figur 3. Gleiche Teile sind mit gleichen Bezugsziffern versehen, sodass in sofern auf die vorangegangene Beschreibung verwiesen wird, um Wiederholungen zu vermeiden.

Deutlich erkennbar ist hier, dass die Messerplatte 13 quasi tangential in die Stirnseite 11 der Reibahle 1 eingesetzt ist. Parallel zu ihrer Vorderseite 15 verläuft die oben erwähnte Rückseite 17, die auf der Auflagefläche 19 im Grundkörper 3 der Reibahle 1 aufliegt.

Der Schneidbereich 23 der Messerplatte 13 weist eine in der durch den Doppelpfeil 25 angedeuteten Vorschubrichtung geneigte Hauptschneide 27 auf, die über einen Knickpunkt 61 in die in entgegengesetzter Richtung geneigte Nebenschneide 29 übergeht. Diese ist, wie oben gesagt, um 1 µ/mm bis 3 µ/mm, vorzugsweise um 1 µ/mm geneigt und fällt damit vom Knickpunkt 61 ausgehend in Richtung auf die Mittelachse 9 ab. Um dies zu erreichen ist die Auflagefläche 19 gegenüber der Stirnseite 11 der Reibahle 1 entsprechend geneigt, sodass die Nebenschneide 23 unter einem rechten Winkel zur Rückseite 17 der Messerplatte 13 verlaufen kann.

In Figur 3 ist die Dicke d der Messerplatte 13 eingezeichnet, die entlang einer gedachten Linie gemessen wird, die senkrecht auf der Vorderseite 15 sowie auf der Rückseite 17 der Messerplatte 13 verläuft.

Projiziert man die Länge der Hauptschneide 27 auf eine gedachte Linie 63, ebenso die Länge der Nebenschneide 29, so ergibt sich, gemessen von der Vorderseite 15 der Messerplatte 13 aus eine Länge l₁ der Hauptschneide 27 von 1,3 mm und eine Länge l₂ der Nebenschneide 29 von 3 mm.

Es hat sich herausgestellt, dass die Länge l₁ in einem Bereich von cirka 0,5 bis 1,8 mm variieren kann, dass aber eine Länge von 1,3 mm optimal ist.

Entsprechendes ergibt sich für die Länge l₂ der Nebenschneide 29. Diese kann im Bereich von 2 bis 5 mm variieren, besonders bewährt hat sich aber eine Länge l₂ = 3 mm.

Aus Figur 3 ist ersichtlich, dass sich die Dicke d aus der Addition der Längen der Haupt- und Nebenschneide 27, 29 ergibt. Es gilt also l₁ + l₂ = d.

Um eine optimale Bearbeitungsqualität einer Bohrungsoberfläche zu erzielen, die mit dem Schneidbereich 23 der Reibahle 1 bearbeitet wird, muss die Messerplatte 13 sicher an der Anlagefläche 19 am Grundkörper 13 der Reibahle 1 anliegen. Dies wird durch die oben erwähnte Spannschraube 39 erreicht. Durch eine hier nicht dargestellte Justiereinrichtung kann der Überstand des Schneidbereichs 23 über die Umfangsfläche 5 der Reibahle 1 eingestellt werden. Dabei gleitet die Rückseite 17 der Messerplatte 13 an der Auflagefläche 19 entlang. Um auch bei einer Verstellung der Messerplatte 13 eine exakte Verjüngung zu gewährleisten, also einen Abfall der Nebenschneide 29 ausgehend vom Knickpunkt 61 zur Mittelachse 9, bedarf es der sicheren Anlage der Messerplatte 13 an dieser Auflagefläche 19.

Es hat sich gezeigt, dass bei einem bestimmten Verhältnis des Durchmessers 55 des Inkreises zur Dicke d der Messerplatte 13 sich ein optimaler Sitz der Messerplatte 13 im Grundkörper 3 der Reibahle 1 ergibt.

Besonders bewährt hat sich ein Verhältnis vom Durchmesser 55 zu der Dicke d von mindestens cirka 1,2 bis maximal 1,5.

Die Plattendicke d der Messerplatte 13 wird, wie oben gesagt, von der Länge l₁ der Hauptschneide 27 und der Länge l₂ der Nebenschneide 29 bestimmt. Es ergibt sich damit eine Dicke d von mindestens 4,3 mm.

Die Reibahle 1 kann auf beliebige Weise an einer Werkzeugmaschine, einem Adapter und/oder Zwischenstück befestigt werden und zwar vorzugsweise mittels eines konischen Schafts 65. Darauf braucht hier nicht näher eingegangen zu werden, weil die Befestigung einer Reibahle 1 an einer Werkzeugmaschine oder dergleichen bekannt ist. Dabei bedarf es einer sehr exakten Kopplung der Reibahle 1 mit einer Werkzeugmaschine, weil die hier beschriebene Messerplatte 13 der Feinbearbeitung von Bohrungsoberflächen dient, wobei die hier angesprochene Verjüngung von besonderer Bedeutung ist.

Die hier beschriebene Auslegung der Messerplatte 13 führt zu sehr guten Bearbeitungsverhältnissen, insbesondere also dann, wenn das Verhältnis des Durchmessers 55 des Inkreises zur Dicke d der Messerplatte 13 wenigstens 1,2 beträgt. Dabei hat sich besonders eine Länge l₁ der Hauptschneide 27 von 1,3 mm bewährt, auch wenn diese einen Doppelanschnitt aufweist, also ausgehend vom Knickpunkt 61 zwei Bereiche, die unter unterschiedlichen Winkeln in der durch den Pfeil 25 angedeuteten Vorschubrichtung geneigt sind. Dabei wird eine Länge l₂ der Nebenschneide 27 von 3 mm gewählt, sodass sich eine Plattendicke d von 4,3 mm ergibt.

## Patentansprüche

1. Reibahle mit
- einem Grundkörper (3),
- mindestens einer im Wesentlichen parallel zu einer Stirnseite (11) der Reibahle (1) angeordneten Messerplatte (13), die
- eine geometrisch definierte Haupt- und eine geometrisch definierte Nebenschneide (29,27) aufweist und
- von einer die Messerplatte (13) durchdringenden Spannschraube (39) an einer Auflagefläche (19) des Grundkörpers (3) der Reibahle (1) gehalten wird, wobei eine in Unteransicht mehreckige Rückseite (17) der Messerplatte (13) an der Auflagefläche (19) anliegt,
- mit einer Justiereinrichtung mit
- einer auf die Messerplatte (13) wirkenden Justierschraube, die in einem Angriffsbereich Justierkräfte in eine Seitenfläche der Messerplatte (13) einleitet,
**dadurch gekennzeichnet, dass**
- das Verhältnis des Durchmessers (55) eines gedachten Inkreises (53), der die Seitenkanten (41,41',45,45') der Rückseite (17) der Messerplatte (13) tangiert, zur Dicke (d) der Messerplatte (13) in einem Bereich von 1,0 bis 1,5 liegt, vorzugsweise im Bereich von 1,2 bis 1,5.

2. Reibahle nach Anspruch 1, **dadurch gekennzeichnet, dass** die Messerplatte (13) vieleckig, vorzugsweise viereckig, ausgebildet ist.

3. Reibahle nach Anspruch 1 oder 2, **dadurch gekennzeichnet, dass** die Messerplatte (13) - in Draufsicht gesehen - als Parallelogramm, vorzugsweise als Rhombus ausgebildet ist.

4. Reibahle nach einem der vorhergehenden Ansprüche, **dadurch gekennzeichnet, dass** die Länge (l₂) der Nebenschneide (29) 2 mm bis 5 mm, vorzugsweise 3 mm beträgt.

5. Reibahle nach einem der vorhergehenden Ansprüche, **dadurch gekennzeichnet, dass** die Hauptschneide (27) der Messerplatte (13) eine Länge (l₁) von 0,5 mm bis 1,8 mm, vorzugsweise von 1,3 mm aufweist.

6. Reibahle nach einem der vorhergehenden Ansprüche, **dadurch gekennzeichnet, dass** die Hauptschneide (27) zwei Schneidbereiche zur Realisierung eines Doppelanschnitts aufweist.

## Claims

1. Reamer having
- a base body (3),
- at least one cutting tip (13) disposed essentially parallel to a face (11) of the reamer (1), which
- has a geometrically defined major cutting edge and a geometrically defined minor cutting edge (29, 27) and
- is held by a tightening screw (39) that penetrates the cutting tip (13), at a support surface (19) of the base body (3) of the reamer (1), wherein a back (17) of the cutting tip (13), which is polygonal in a bottom view, lies against the support surface (19),
- having an adjustment device having
- an adjustment screw that acts on the cutting tip (13), which screw introduces adjustment forces into a side surface of the cutting tip (13) in an engagement region,
**characterized in that**
- the ratio of the diameter (55) of an imaginary in-circle (53), which is tangential to the side edges (41, 41', 45, 45') of the back (17) of the cutting tip (13), lies in a range of 1.0 to 1.5, preferably in a range of 1.2 to 1.5, relative to the thickness (d) of the cutting tip (13).

2. Reamer according to claim 1, **characterized in that** the cutting tip (13) is configured to be polygonal, preferably quadrangular.

3. Reamer according to claim 1 or 2, **characterized in that** the cutting tip (13) - seen in a top view - is configured as a parallelogram, preferably as a rhombus.

4. Reamer according to one of the preceding claims, **characterized in that** the length (l₂) of the minor cutting edge (29) amounts to 2 mm to 5 mm, preferably 3 mm.

5. Reamer according to one of the preceding claims, **characterized in that** the major cutting edge (27) of the cutting tip (13) has a length (l₁) of 0.5 mm to 1.8 mm, preferably of 1.3 mm.

6. Reamer according to one of the preceding claims, **characterized in that** the major cutting edge (27) has two cutting regions to implement a double cut.

## Revendications

1. Alésoir comprenant
- un corps de base (3),
- au moins un bloc d'appui (13) disposé essentiellement parallèlement à un côté frontal (11) de l'alésoir (1), qui
- présente une lame principale définie géométriquement et une lame secondaire définie géométriquement (29, 27) et
- est maintenu par une vis de serrage (39) traversant le bloc d'appui (13) sur une surface d'appui (19) du corps de base (3) de l'alésoir (1), dans lequel un côté arrière (17) du bloc d'appui (13), polygonal en vue de dessous, repose sur la surface d'appui (19),
- comprenant un dispositif de réglage avec
- une vis de réglage agissant sur le bloc d'appui (13) qui introduit des forces de réglage dans une surface latérale du bloc d'appui (13) dans une zone d'attaque,
**caractérisé en ce que**
- le rapport entre le diamètre (55) d'un cercle inscrit imaginaire (53) qui est tangent aux arêtes latérales (41, 41', 45, 45') du côté arrière (17) du bloc d'appui (13), et l'épaisseur (d) du bloc d'appui (13) se situe dans une plage de 1,0 à 1,5, de préférence dans la plage de 1,2 à 1,5.

2. Alésoir selon la revendication 1, **caractérisé en ce que** le bloc d'appui (13) est réalisé de manière polygonale, de préférence carrée.

3. Alésoir selon la revendication 1 ou 2, **caractérisé en ce que** le bloc d'appui (13) est réalisé en tant que parallélogramme, de préférence en tant que losange, vu en vue de dessus.

4. Alésoir selon l'une quelconque des revendications précédentes, **caractérisé en ce que** la longueur (l₂) de la lame secondaire (29) est de 2 mm à 5 mm, de préférence de 3 mm.

5. Alésoir selon l'une quelconque des revendications précédentes, **caractérisé en ce que** la lame principale (27) du bloc d'appui (13) présente une longueur (l₁) de 0,5 mm à 1,8 mm, de préférence de 1,3 mm.

6. Alésoir selon l'une quelconque des revendications précédentes, **caractérisé en ce que** la lame principale (27) présente deux zones de coupe pour réaliser une double entame.
